# EUROPEAN PATENT SPECIFICATION

(11) **EP 0 378 422 B1**
(45) Date of publication and mention of the grant of the patent: **26.07.1995**
(21) Application number: 90300342.4
(22) Date of filing: 11.01.1990
(51) Int. Cl.: G06F 13/28

(54) **Look ahead bus transfer request**
Busübertragungsanforderung mit Vorrausschau
Demande de transfert sur bus anticipée

(30) Priority: 13.01.1989 US 297715
(43) Date of publication of application: 18.07.1990
(73) Proprietor: International Business Machines Corporation, Armonk, N.Y. 10504 (US)
(72) Inventor: Bailey, Roger Ned, Austin, Texas, 78759 (US); Mansfield, Robert Lockwood, Austin, Texas, 78727 (US); Spencer, Alexander Koos, Austin, Texas, 78727 (US)
(74) Representative: Bailey, Geoffrey Alan

(56) References cited:
- EP-A- 0 109 308
- EP-A- 0 333 594
- US-A- 4 675 807
- US-A- 4 797 809

## Description

This invention relates to requests for transfers on computer buses.

The prior art contains many attempts to maximize bus usage and improve performance during direct memory access (DMA) transfers. IBM Technical Disclosure Bulletin, Vol. 30, No. 12, May, 1988, Page 211 describes a technique in which a DMA arbitration results in a larger data transfer to reduce the total amount of arbitrations that must occur to pass a given data block. IBM Technical Disclosure Bulletin, Vol. 24, No. 10, March, 1982, Page 5295 discloses an arrangement which provides for an automatic channel request in order to reduce data store size requirements and the amount of microcode for performing a DMA transfer.

US Patent US-A-4912632, filed March 31, 1988 published March 27, 1990 (corresponding to EP-A-0288649, published November 2, 1988) relates to a memory subsystem controller including means for causing a memory transfer initiated by the DMA to be interrupted at a cache line boundary to service a processor request and thereafter resume data transfer.

US Patent US-A-5251303, published October 5, 1993 relates to a DMA controller requiring no intervention from a main processor once the first of a series of block transfers has begun.

US-A-4797809 discloses a direct memory access data transfer device having address registers, an increment counter and line and byte counters. The increment counter indicates an address increment between succeeding transfer blocks of data from a first storage location to a second storage location within a memory device. After the transfer of each block of data, the address is advanced by an amount corresponding to the content of the increment counter.

In the prior art one DMA data transfer is completed before another bus arbitration occurs. Not only does bus arbitration consume overhead in prior art systems, which in itself is undesirable, there may be sufficient idle time on the bus for a request from some other device to be granted before the next DMA bus request is raised, thereby delaying the grant which would allow another DMA data transfer to commence.

It is desirable to minimize idle time on the bus and to minimize the time between DMA arbitration initiations necessary to transfer large amounts of data. In the prior art there is no teaching of initiating a bus request for an ensuing transfer while a current transfer is still in progress, thereby enabling back to back DMA transfers.

Accordingly the present invention provides a data transfer control system for performing direct memory access block data transfers on a shared bus between a main memory and an external device, comprising:
means for determining a total count of contiguous data units contained in a data block to be transferred;
means for issuing a bus request, to request access to the bus for the transfer of one or more contiguous data units;
means, responsive to a grant of bus access, for transferring one or more contiguous data units on said bus; and
means, associated with said means for transferring, for updating at each transfer said total count of contiguous data units to be transferred; characterised in that the system also includes
means for issuing a bus request before completion of the current data unit transfer, to request access to the bus for the transfer of one or more subsequent contiguous data units if the current data block transfer is incomplete.

The present invention also provides a method for performing direct memory access block data transfers on a shared bus between a main memory and an external device, comprising the steps of:
determining a total count of contiguous data units contained in a data block to be transferred;
issuing a bus request, to request access to the bus for the transfer of one or more contiguous data units;
in response to a grant of bus access, transferring one or more contiguous data units on said bus; and
updating at each transfer said total count of contiguous data units to be transferred;
characterised in that the method also includes the step, if the current data block transfer is incomplete, of issuing a bus request before completion of the current data unit transfer, to request access to the bus for the transfer of one or more subsequent contiguous data units.

The present invention overcomes the prior art shortcoming and reduces the number of cycles where nothing useful occurs by "hiding" bus arbitration within data transfer cycle time. In a preferred embodiment, the present invention is utilized in a communications I/O channel driven by a main system processor and connecting the main processor to a communications link. The channel hardware provides communication protocols and data transfer, using DMA technology, between the communications link and the main system processor storage.

The I/O channel includes three asynchronous circuits operating independently as well as a pair of buffers and several counters. A DMA controller monitors the state of DMA buffers and acts to fill or empty them when appropriate, based on the type of transaction in progress. A transmit circuit includes logic for removing data from the DMA buffers and placing it on the communications link. A receive circuit includes logic for taking data from the link and placing it into the DMA buffers.

A counter associable with each buffer during transmit operations is included in the DMA controller. Two counters are used to maintain the count of cache line units stored within the buffers during receive operations.

When receiving data from the link, the receive logic counts data as it is received and loads the cache line counter associated with each buffer with the number of cache lines received. The DMA controller transfers data over a shared I/O bus in cache line increments to main storage, decrementing the cache line counter on each line transfer until all current cache lines have been transferred.

While each transfer is in progress, the DMA controller determines if another cache line is to be transferred. If so, the controller then places a request on the bus before the transfer in progress is completed. Thus, the next transfer may begin as soon as the one in progress completes.

When transmitting data, the DMA controller reads from a tag word table which is resident in the channel. This table was loaded by the system processor with, inter alia, DMA addresses of data to be transmitted and the count of cache lines of data to be transmitted from those addresses.

The DMA controller then compares the count of cache lines in the tag table entry with the capacity of one of its pair of buffers and loads its cache line counter with the lesser of the total number of cache lines to be transmitted or the number of cache lines which may be accommodated in one buffer. The tag table cacheline count is decremented by the buffer capacity and if there is a positive remainder, that value replaces the original tag table cache line count. In this way the DMA controller will be able to know that more data remains to be transferred.

Data is retrieved from main system storage in cache line increments, and the DMA controller decrements its cache line counter until one of its pair of its buffers is filled.

If there is more data to be transmitted, the DMA controller fills the other of its buffers as above described while the first buffer is emptied onto the link by the transmit logic. The DMA controller iterates these steps until all data is transferred.

By using cache line counters to track when the associated buffers will be full, the DMA controller is able to prerequest the bus when necessary to enable back to back transfers. In this way the arbitration sequence occurs within transfer cycle time, increasing usage of available bus bandwidth.

Monitoring buffer status during transfer and communicating that status to independent data transfer circuits has several advantages. Multiple cache line transfers can be transferred between logic partitions without intervention between each. A bus request for a subsequent data transfer may be made before a current transfer is complete, pipelining arbitration into the transfer to better utilize available bus bandwidth to transfer data.

In order that the invention may be fully understood a preferred embodiment thereof will now be described, by way of example only, with reference to the accompanying drawings in which:-
Fig. 1 is a logical block diagram of an I/O channel in which the present invention is embodied, particularly illustrating elements of receive logic;
Fig. 2 is a logical block diagram similar to Fig. 1, illustrating elements of transmit logic;
Fig. 3 is a timing diagram of receive operation;
Fig. 4 is a timing diagram of transmit operation;
Fig. 5 is a flow chart of receive logic; and
Fig. 6 is a flow chart of transmit logic.

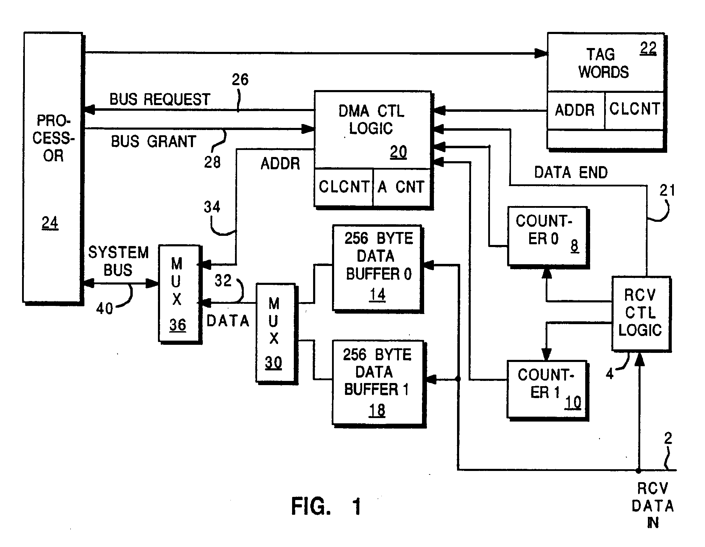

Refer now to Fig. 1 which is a schematic block diagram of an I/O channel. Serial data is received from a communications link over line 2. Receive control logic 4 counts received bytes in cache line increments and loads the result in either of cache line counters 8 and 10. Cache line counter 8 is associated with data buffer 14, and cache line counter 10 is associated with data buffer 18. In this exemplary, preferred embodiment a cache line increment is 64 bytes, and the capacity of each buffer 14 and 18 is 256 bytes. Therefore, cache line counters 8 and 10 contain values 0, 1, 2 or 3 to correspond to 64, 128, 192 or 256 bytes, respectively.

Counters 8 and 10 are accessible by DMA control logic 20. DMA control logic 20 reads a tag word from tag word table 22 which is provided by the system processor 24 with a plurality of entries, each including the main memory address ADDR which will receive the data from the link and a cache line count CLCNT, which for receive operations is set to some maximum value since the amount of data coming in from the link is unknown until an end of data indicator is received. This condition is made known to DMA control logic 20 over line 21.

When DMA control logic 20 determines from an interrogation of the active cache line counter 8 or 10 that either of buffers 14 and 18 is approaching the full state, or receives an end of data signal, it issues a request over bus request line 26. A bus grant signal is input to DMA control logic 20 over line 28.

Data is output from buffer 14 or 18 in 8 byte increments through multiplexer 30 for placement on 8 byte wide data bus 32. Data bus 32 and address line 34, carrying the main storage address obtained by DMA control logic 20 from tag word table 22, are input to multiplexer 36 for placement on shared I/O bus 40.

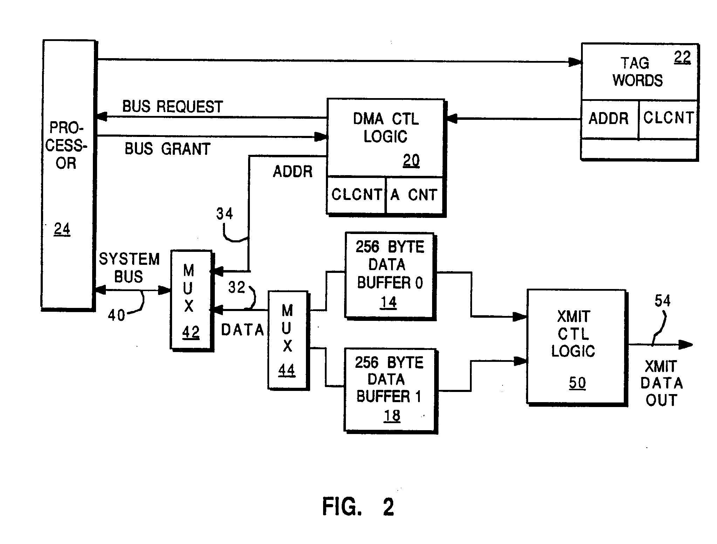

Refer now to Fig. 2, a block diagram of the I/O channel embodying the present invention, particularly illustrating transmit logic. Data is placed on shared I/O bus 40 from system processor 24 under control of DMA control logic 20 and loaded alternately into buffers 14 and 18. System processor 24 loads tag word table 22 with an entry containing the address ADDR in main memory from which data is to be transmitted as well as the amount of data, in cache line increments CLCNT, to be transmitted. DMA control logic 20 loads its address counter ACNT with the contents of the tag word table entry ADDR. DMA control logic 20 then loads its cache line counter CLCNT with the lesser of the tag table CLCNT remaining to be transmitted, as determined by subtracting buffer capacity from the tag table CLCNT, or buffer size, i.e., the maximum number of cache line increments able to be placed in the buffer. If that difference is greater than 0, the tag table CLCNT is replaced by that difference.

DMA control logic 20 initiates a main memory read in a conventional manner. Data on shared I/O bus 40 passes through multiplexers 42 and 44 and is loaded alternately into buffers 14,18 as earlier described.

As this buffer load operation occurs, DMA control logic 20 monitors its CLCNT. If the DMA CLCNT is not 0, more data is to be transferred. Thus, DMA control logic 20, in a manner similar to that described in connection with Fig. 1, issues a bus request at a point in time preceding the completion of the current data transfer.

When either buffer, 14 or 18, becomes filled, transmit control logic 50 empties that buffer's contents onto serial data line 54 to the communications link.

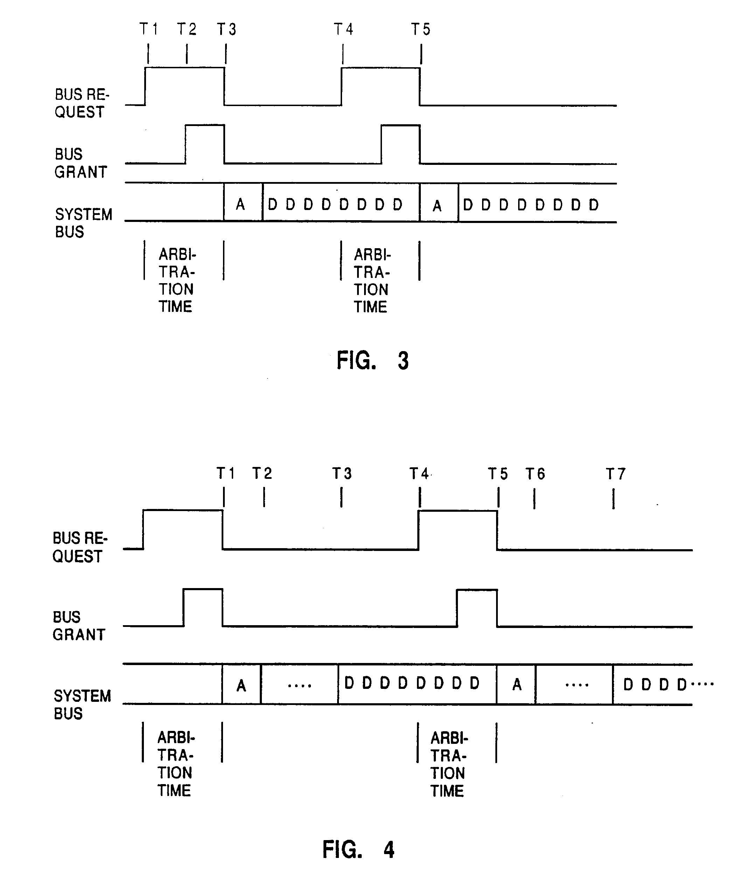

In both Figs. 3 and 4 the character A represents an address in main system memory. Each instance of the character D represents eight bytes of data, the total of eight Ds being one cache line increment in this exemplary embodiment.

Fig. 3 graphically indicates in a timing chart, the nature of the performance enhancements provided by the present invention's enabling back to back data transfers of data received from a communications link to system processor memory over shared I/O system bus 40. Second and subsequent bus arbitrations occur even though data previously placed on bus 40 has not been completely transferred.

At time T1 the first bus request is issued. In response, bus grant comes up at time T2. An address and data are placed on the bus at time T3. By time T4, DMA control logic 20 has determined it necessary to again issue a bus request, though the previous data transfer is still incomplete. The bus request is overlapped with data transfer. At time T5 the second bus grant is received, coincident with completion of the data transfer. Following the last data transfer an address and data associated with the next cache line data transfer is placed on the bus.

Fig. 4 is a timing chart illustrating how bus arbitration occurs in the midst of data transmission from bus 40 to the communications link. At time T1 the first bus arbitration cycle completes and DMA control logic places the address ADDR from tag table 22 on the bus. There follows some idle time on the bus between T2, when DMA control logic 20 accesses main memory and T3, the point in time at which data from that address in main memory is placed on the bus. Advantageously in the present invention there is some compensation for that idle period because at time T4, while data is being transferred, DMA control logic 20 raises a bus request. Coincident with the grant being given is the completion of the previous data transfer cycle at time T5. DMA control logic 20 immediately places the next address retrieved from tag table 22 on bus 40. Again there is some idle period on the bus while the access to main memory takes place between times T6, the end of the address, and T7, the time at which data is placed on the bus.

It should be noted in connection with Figs. 3 and 4 that in the event a bus grant is not received coincident with the completion of transfer of a cache line increment of data, the DMA control logic essentially remains in hold until such time as the bus grant is received. In other words, once bus availability is interrupted, e.g. because the system processor gave control of the bus to another device, the present invention enables data transfer to resume its transfer operation immediately upon receipt of the bus grant.

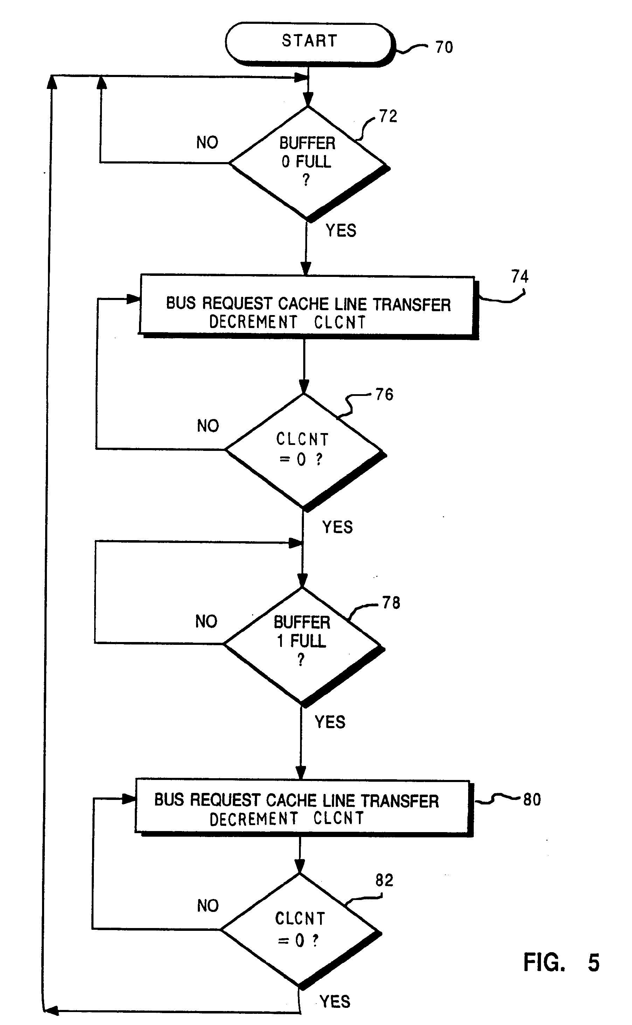

Refer again to Fig. 1 in connection with Fig. 5, a flow chart illustrating DMA control logic 20 during receive operations. The beginning of any given receive operation is indicated at terminal 70. DMA control logic 20 at decision block 72 interrogates counter 8 to determine if buffer 14 has been completely filled by receive logic 4. If not, DMA control logic iterates until it finds a positive response, upon receipt of which it raises at block 74 a bus request and conducts a cache line transfer and decrements its cache line counter CLCNT. As above described, DMA control logic 20 then at decision point 76 tests its CLCNT; and if that value is greater than 0, returns control to block 74.

When it is determined that CLCNT is 0, DMA logic queries the content status of buffer 18 at decision block 78 by examining counter 10. If buffer 18 is not full, the query sequence is repeated until the buffer is full. Then, at block 80 DMA control logic 20 again raises a bus request on line 26 and upon receipt of a grant over line 28 performs a cache line transfer. As before, the DMA CLCNT is decremented. The new value of DMA CLCNT is tested at block 82. While DMA CLCNT is greater than 0 as indicated at test 82, the data transfer counter decrement sequence is repeated. When DMA CLCNT goes to 0, the sequence beginning at query block 72 is repeated.

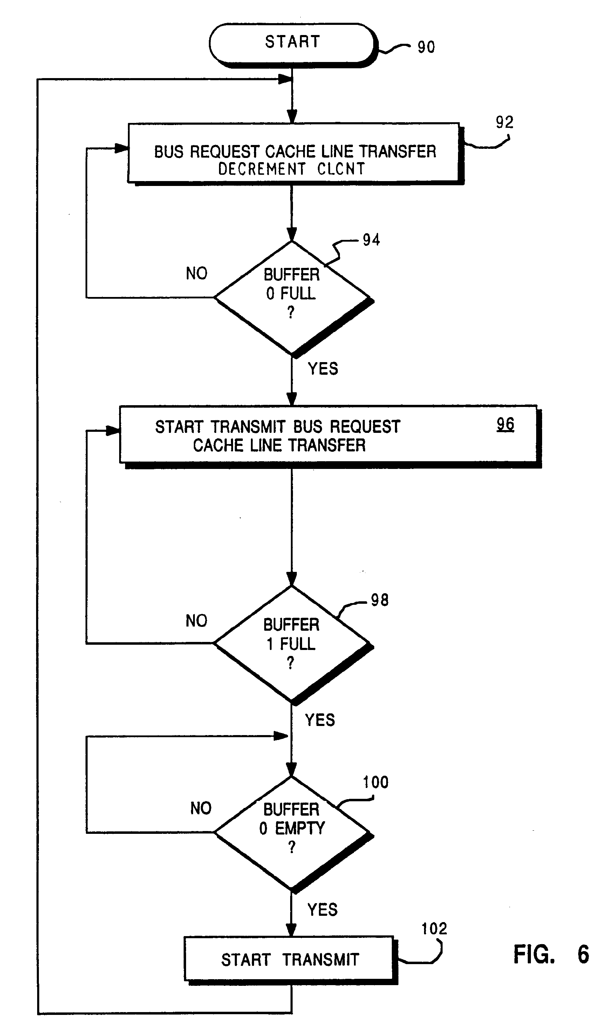

Fig. 6 is a flow chart of DMA control logic 20 during transmit operations and will be described having reference to Fig. 2 as well. Any given transmit operation begins as indicated at terminal 90. DMA control logic 20 at step 92 raises a bus request on line 26. Upon receipt of a grant on line 28, the address in main system memory is placed on the bus for accessing main memory. Data in a cache line increment is placed on the bus and loaded first into buffer 14. As before, the DMA CLCNT is decremented. At step 94 DMA control logic 20 determines if that buffer is full and continues the sequence of steps 92 and 94 until a full condition is indicated. When that condition occurs, control is passed at step 96 to transmit logic 50 for transmitting the data from buffer 14 to the communication link over serial line 54.

While transmit logic 50 empties buffer 14, DMA control logic begins loading buffer 18. This operation entails a bus request and accessing of main memory for placing the next cache line increment of data on the bus.

DMA control logic 20 then at step 98 determines whether buffer 18 is full. The bus request main memory access sequence just noted is repeated until buffer 18 is full. DMA control logic 20 then loops through step 100 until transmit logic 50 has completed the transmission of data from buffer 14. Then at step 102 DMA control logic 20 instructs transmit logic 50 to empty buffer 18 data onto line 52.

The entire sequence from step 92 through step 102 is repeated until the entire amount of data to be transmitted has been sent to the communications link.

## Claims

1. A data transfer control system for performing direct memory access block data transfers on a shared bus (40) between a main memory and an external device, comprising:
means (4, 8, 10, 20) for determining a total count of contiguous data units contained in a data block to be transferred;
means (20) for issuing a bus request, to request access to the bus for the transfer of one or more contiguous data units;
means (20, 30, 32, 34, 36), responsive to a grant of bus access, for transferring one or more contiguous data units on said bus; and
means (20, 22), associated with said means for transferring, for updating at each transfer said total count of contiguous data units to be transferred; characterised in that the system also includes
means (20) for issuing a bus request before completion of the current data unit transfer, to request access to the bus for the transfer of one or more subsequent contiguous data units if the current data block transfer is incomplete.

2. A system as claimed in claim 1 additionally including:
buffer storage (14, 18) for a plurality of data units.

3. A system as claimed in claim 2 wherein, during data transfer from said external device to said main memory, said means for determining comprises:
in-counter means (8, 10, 20) associated with said buffer storage (14, 18); and
receive logic (4) for counting data units as they are received, loading said data units in said buffer storage, and placing a total count of data units received in said in-counter means.

4. A system as claimed in claim 3, wherein:
said means for transferring includes means for placing buffer storage contents on said shared bus; and
said means for updating comprises means for decrementing said in-counter means.

5. A system as claimed in any of claims 1 to 4 wherein, during data transfer from said memory to said external device, said means for determining comprises:
out-counter means (20, 22) adapted to accept a count of data units from a processor controlling said main memory.

6. A system as claimed in claim 5, wherein said means for updating comprises means for decrementing said out-counter means.

7. A system according to any one of the preceding claims, including:
means for entering a hold state if a bus grant has not been received when the current data unit transfer is completed, until a bus grant is received.

8. A method for performing direct memory access block data transfers on a shared bus (40) between a main memory and an external device, comprising the steps of:
determining a total count of contiguous data units contained in a data block to be transferred;
issuing a bus request (74,80,92), to request access to the bus for the transfer of one or more contiguous data units;
in response to a grant of bus access, transferring (74,80,96) one or more contiguous data units on said bus; and
updating (74,80) at each transfer said total count of contiguous data units to be transferred;
characterised in that the method also includes the step, if the current data block transfer is incomplete, of issuing a bus request before completion of the current data unit transfer, to request access to the bus for the transfer of one or more subsequent contiguous data units.

9. A method according to claim 8 for transferring a block of data to a main memory from an external device, wherein data from the external device is loaded into buffer storage adapted to store an integer number of said data units;
wherein said step of maintaining a count of data units comprises determining (72,78,94,98) the data content of the buffer or buffers;
wherein said step of issuing a request (74,80) is carried out to initiate a direct memory access transfer whenever said step of determining buffer content indicates that a buffer is full; and
wherein said steps of loading data into buffer storage, determining the data content of the buffer or buffers, and issuing a request for direct memory access transfer are repeated sequentially until the complete block of data is transferred.

10. A method according to claim 8 or claim 9, wherein a hold state is entered if a grant of bus access has not been received when the current data unit transfer is completed, until a bus grant is received.

11. A computer system including main memory, a shared bus (40) for data transfer between the main memory and an external device, and a data transfer control system according to any one of claims 1 to 7.

## Patentansprüche

1. Ein Datenübertragungs-Steuersystem zum Ausführen von Blockdatenübertragungen mit Direktspeicherzugriff auf einem gemeinsam Bus (40) zwischen einem Hauptspeicher und einem externen Gerät, folgendes umfassend:
Mittel (4, 8, 10, 20) zum Ermitteln einer Gesamtzahl von benachbarten Dateneinheiten, die in einem zu übertragenden Datenblock enthalten sind;
Mittel (20) zum Ausgeben einer Busanforderung, um den Zugriff auf den Bus für die Übertragung einer oder mehrerer benachbarter Dateneinheiten anzufordern;
Mittel (20, 30, 32, 34, 36), die auf die Gewährung eines Buszugriffs reagieren, zur Übertragung einer oder mehrerer benachbarter Dateneinheiten auf den genannten Bus; und
Mittel (20, 22), die den genannten Übertragungsmitteln zugeordnet sind, um bei jeder Übertragung die genannte Gesamtzahl benachbarter zu übertragender Dateneinheiten zu aktualisieren; dadurch gekennzeichnet, daß das System außerdem umfaßt:
Mittel (20) zum Ausgeben einer Busanforderung, bevor die Übertragung der aktuellen Dateneinheit abgeschlossen ist, um einen Buszugriff für die Übertragung einer oder mehrerer aufeinanderfolgender benachbarter Dateneinheiten anzufordern, wenn die Übertragung des aktuellen Datenblocks noch nicht abgeschlossen ist.

2. Ein System nach Anspruch 1, das zusätzlich umfaßt:
einen Pufferspeicher (14, 18) für eine Vielzahl von Dateneinheiten.

3. Ein System nach Anspruch 2, bei dem, bei der Datenübertragung von dem genannten externen Gerät zu dem genannten Hauptspeicher das genannte Ermittlungsmittel folgendes umfaßt:
Eingangszähler-Mittel (8, 10, 20), die dem genannten Pufferspeicher (14, 18) zugeordnet sind; und
eine Empfangslogik (4) zum Zählen der Dateneinheiten bei Eingang, Laden der genannten Dateneinheiten in den genannten Pufferspeicher und Ablegen einer Gesamtzahl von empfangenen Dateneinheiten in dem genannten Eingangszähler-Mittel.

4. Ein System nach Anspruch 3, bei dem:
das genannte Übertragungsmittel Mittel enthält, die den Pufferspeicherinhalt auf dem genannten gemeinsamen Bus plazieren; und
das genannte Aktualisierungsmittel Mittel zum Rückwärtszählen des genannten Eingangszähler-Mittels enthält.

5. Ein System nach jedem der Ansprüche 1 bis 4, bei dem während der Datenübertragung vom genannten Speicher zu dem genannten externen Gerät das genannte Ermittlungsmittel folgendes aufweist:
Ausgangszähler-Mittel (20, 22), die eine Zahl von Dateneinheiten aus einem Prozessor aufnehmen können, der den genannten Hauptspeicher steuert.

6. Ein System nach Anspruch 5, bei dem das genannte Aktualisierungsmittel Mittel zum Rückwärtszählen des genannten Ausgangszähler-Mittels umfaßt.

7. Ein System nach jedem der vorangehenden Ansprüche, das folgendes umfaßt:
Mittel zum Einnehmen eines Haltezustands, wenn eine Busbewilligung nicht eingegangen ist, wenn die Übertragung der aktuellen Dateneinheit bereits abgeschlossen ist, bis eine Busbewilligung empfangen wird.

8. Eine Methode zum Ausführen von Datenblockübertragungen mit Direktspeicherzugriff auf einem gemeinsamen Bus (40) zwischen einem Hauptspeicher und einem externen Gerät, die folgende Schritte aufweist:
Ermitteln einer Gesamtzahl von benachbarten Dateneinheiten, die in einem zu übertragenden Datenblock enthalten sind;
Ausgabe einer Busanforderung (74, 80, 92), um für die Übertragung einer oder mehrerer benachbarter Dateneinheiten den Zugriff auf den Bus anzufordern;
in Antwort auf die Gewährung eines Buszugriffs, Übertragung (74, 80, 96) einer oder mehrerer benachbarter Dateneinheiten auf den genannten Bus; und
Aktualisieren (74, 80) der genannten Gesamtzahl von benachbarten zu übertragenden Dateneinheiten bei jeder Übertragung;
dadurch gekennzeichnet, daß die Methode außerdem, wenn die Übertragung des aktuellen Datenblocks noch nicht abgeschlossen ist, den Schritt des Ausgebens einer Busanforderung umfaßt, bevor die Übertragung der aktuellen Dateneinheit abgeschlossen ist, um den Zugriff auf den Bus für die Übertragung einer oder mehrerer aufeinanderfolgender benachbarter Dateneinheiten anzufordern.

9. Eine Methode nach Anspruch 8 zur Übertragung eines Datenblocks von einem externen Gerät zum Hauptspeicher, bei der die Daten von dem externen Gerät in den Pufferspeicher geladen werden, der in der Lage ist, eine ganzzahlige Anzahl der genannten Dateneinheiten zu speichern;
bei der der genannte Schritt der Vorhaltung einer Zahl von Dateneinheiten die Ermittlung (72, 78, 94, 98) des Dateninhalts des Puffers oder der Puffer umfaßt;
bei der der genannte Schritt der Ausgabe einer Anforderung (74, 80) ausgeführt wird, um eine Übertragung mit Direktspeicherzugriff immer dann einzuleiten, wenn der genannte Schritt der Ermittlung des Pufferinhalts zeigt, daß ein Puffer voll ist; und
bei der die genannten Schritte des Ladens von Daten in den Pufferspeicher, des Ermittelns des Dateninhalts des Puffers oder der Puffer und des Ausgebens einer Anforderung für eine Übertragung mit Direktspeicherzugriff aufeinanderfolgend solange wiederholt werden, bis der komplette Datenblock übertragen ist.

10. Eine Methode nach Anspruch 8 oder Anspruch 9, bei der, wenn die Bewilligung des Buszugriffs noch nicht eingegangen ist, nachdem die Übertragung der aktuellen Dateneinheit bereits abgeschlossen ist, ein Haltezustand so lange eingenommen wird, bis eine Busbewilligung empfangen wird.

11. Ein Computersystem mit einem Hauptspeicher, einem gemeinsamen Bus (40) für die Übertragung von Daten zwischen dem Hauptspeicher und einem externen Gerät, und einem Datenübertragungs-Steuersystem nach einem der Ansprüche 1 bis 7.

## Revendications

1. Un système de commande de transfert de données pour exécuter des transferts de données par blocs à accès de mémoire direct sur un bus partagé (40) entre une mémoire principale et un dispositif externe, comprenant:
- des moyens (4, 8, 10, 20) pour déterminer un compte total d'unités de données contiguës contenues dans un bloc de données à transférer,
- des moyens (20) pour délivrer une demande de bus, pour demander accès au bus pour le transfert d'une ou de plusieurs unités de données contiguës;
- des moyens (20, 30, 32, 34, 36) répondant à une allocation d'accès de bus pour transférer une ou plusieurs unités de données contiguës sur ledit bus; et
- des moyens (20, 22) associés auxdits moyens de transfert, pour mettre à jour à chaque transfert, ledit compte total d'unités de données contiguës à transférer;
caractérisé en ce que le système comprend aussi:
- des moyens (20) pour délivrer une demande de bus avant l'achèvement du transfert d'unités de données en cours, pour demander accès au bus pour le transfert d'une ou de plusieurs unités de données contiguës suivantes si le transfert de blocs de données en cours n'est pas achevé.

2. Un système selon la revendication 1 comprenant en outre:
- une mémoire intermédiaire (14, 18) pour une pluralité d'unités de données.

3. Un système selon la revendication 2 dans lequel, pendant le transfert des données dudit dispositif externe à ladite mémoire principale, lesdits moyens de détermination comprennent:
- des moyens compteurs d'entrée (8, 10, 20) associés à ladite mémoire intermédiaire (14, 18); et
- la logique de réception (4) pour compter des unités de données à mesure qu'elles sont reçues, pour charger lesdites unités de données dans ladite mémoire intermédiaire, et pour placer un compte total des unités de données reçues dans lesdits moyens compteurs d'entrée.

4. Un système selon la revendication 3 dans lequel:
- lesdits moyens de transfert comprennent des moyens pour placer des contenus de mémoire intermédiaire sur ledit bus partagé; et
- lesdits moyens de mise à jour comprennent des moyens pour décrémenter lesdits moyens compteurs d'entrée.

5. Un système selon l'une quelconque des revendications 1 à 4 dans lequel, pendant le transfert des données de ladite mémoire audit dispositif externe, lesdits moyens de détermination comprennent:
- des moyens compteurs de sortie (20, 22) adaptés pour accepter un compte d'unités de données issues d'un processeur commandant ladite mémoire principale.

6. Un système selon la revendication 5 dans lequel lesdits moyens de mise à jour comprennent des moyens pour décrémenter lesdits moyens compteurs de sortie.

7. Un système selon l'une quelconque des revendications précédentes, comprenant:
- des moyens pour entrer un état de maintien si une allocation de bus n'a pas été reçue lorsque le transfert d'unités de données en cours est achevé, jusqu'à ce qu'une allocation de bus soit reçue.

8. Une méthode pour exécuter des transferts de données par bloc à accès de mémoire direct sur un bus partagé (40) entre une mémoire principale et un dispositif externe, comprenant les étapes suivantes:
- la détermination d'un compte total d'unités de données contiguës contenues dans un bloc de données à transférer;
- la délivrance d'une demande de bus (74, 80, 92), pour demander accès au bus pour le transfert d'une ou de plusieurs unités de données contiguës;
- en réponse à une allocation d'accès au bus, le transfert (74, 80, 96) d'une ou de plusieurs unités de données contiguës sur ledit bus; et
- la mise à jour (74, 80) à chaque transfert, dudit compte total d'unités de données contiguës à transférer;
caractérisée en ce que la méthode comprend aussi, si le transfert du bloc de données en cours n'est pas achevé, la délivrance d'une demande de bus avant l'achèvement du transfert d'unité de données en cours, pour demander accès au bus pour le transfert d'une ou de plusieurs unités de données contiguës suivantes.

9. Une méthode selon la revendication 8 pour transférer un bloc de données à une mémoire principale depuis un dispositif externe,
dans laquelle des données issues du dispositif externe, sont chargées dans une mémoire intermédiaire adaptée pour emmagasiner un nombre entier desdites unités de données;
dans laquelle ladite étape de maintien d'un compte d'unités de données comprend la détermination (72, 78, 94, 98) du contenu de données de la ou des mémoires intermédiaires;
dans laquelle ladite étape de délivrance d'une demande (74, 80) est exécutée pour initialiser un transfert d'accès de mémoire direct chaque fois que ladite étape de détermination du contenu de mémoire intermédiaire indique qu'une mémoire intermédiaire est pleine; et
dans laquelle lesdites étapes de chargement des données en mémoire intermédiaire, de détermination du contenu de données de la ou des mémoires intermédiaires, et de délivrance d'une demande de transfert à accès de mémoire direct, sont répétées séquentiellement jusqu'à ce que le bloc de données complet soit transféré.

10. Une méthode selon la revendication 8 ou la revendication 9 dans laquelle un état de maintien est entré si une allocation d'accès au bus n'a pas été reçue lorsque le transfert d'unité de données en cours est achevé, jusqu'à ce qu'une allocation de bus soit reçue.

11. Un système d'ordinateur comprenant une mémoire principale, un bus partagé (40) pour transférer des données entre la mémoire principale et un dispositif externe, et un système de commande de transfert de données selon l'une quelconque des revendications 1 à 7.
